# EUROPEAN PATENT APPLICATION

(11) **EP 4 778 905 A1**
(43) Date of publication of application: **22.07.2026**
(21) Application number: 25166457.9
(22) Date of filing: 26.03.2025
(51) Int. Cl.: C04B 35/185, C04B 35/634, C04B 35/64

(54) **CERAMIC COMPOSITE AND METHOD FOR PRODUCING THE SAME**

(30) Priority: 17.01.2025 PL 45098225
(71) Applicant: Akademia Gorniczo-Hutnicza im. Stanislawa Staszica w Krakowie, 30-059 Krakow (PL)
(72) Inventor: Partyka, Janusz, 32-830 Wojnicz (PL); Kozien, Dawid, 31-586 Kraków (PL); Pasiut, Katarzyna, 31-564 Kraków (PL)
(74) Representative: Pietruszynska, Elzbieta

(57) **Abstract**

The subject matter of the invention is a ceramic composite comprising mullite, Si₃N₄, SiC and SiO₂.

The subject matter of the invention is also a method for producing a ceramic composite comprising mullite, Si₃N₄, SiC and SiO₂, wherein the method comprises the following steps:
a) dispersing at least one clayey raw material to obtain at least one dispersed clayey raw material,
b) drying and sintering the at least one dispersed clayey raw material at a temperature in the range of 900 to 1300°C to obtain a sinter,
c) cooling the sinter to obtain a cooled sinter,
d) grinding the cooled sinter to obtain a ground sinter,
e) homogenizing the ground sinter with a reagent serving as a carbon source to obtain a mixture,
f) roasting the obtained mixture in a nitrogen atmosphere at a temperature in the range of 850 to 1000°C to obtain a roasted product,
g) pressing the roasted product to obtain a pressed product, and
h) sintering the pressed product in a nitrogen atmosphere at a temperature in the range of 1100 to 1800°C to obtain the ceramic composite comprising mullite, Si₃N₄, SiC and SiO₂.

## Description

### Field of the Invention

The present invention generally relates to the field of ceramic composites obtained from clayey raw materials. More particularly, the present invention relates to a ceramic composite comprising mullite and other components and a method for producing the same.

### Description of prior art

Porous composites containing i.a. mullite, SiC and SiO₂ are characterized by high thermal shock resistance. These composites can be used in industry as catalysts. In addition, they are one of the most promising substrate materials for heat storage in next-generation solar energy conversion systems. The properties of these composites strongly depend on their synthesis temperature.

The synthesis of mullite-SiC-SiO₂ composites requires high temperatures. In particular, the reaction between SiO₂ and Al₂O₃, in which mullite is formed and then densified, requires a temperature in the range of 1400°C to 1600°C. The higher the temperature of composite synthesis, the better the densification of mullite phases. However, at a high temperature in the air atmosphere, SiC oxidizes, which causes the formation of cristobalite. The cristobalite formed during sintering is characterized by low strength and low thermal shock resistance. One of the solutions used in industry is the use of mineralizers, mainly metal oxides, including V₂O₅ and MoO₃ having a melting point below 800°C, which have the potential to promote mullitization. In addition, the highly covalent nature of SiC bonds makes sintering composites containing silicon carbide difficult.

Various methods for producing composites comprising mullite in combination with other components have been described in scientific publications.

For example, the article by D. Pottmaier, J.J. Rosario, M.C. Fredel, A.A.M. Oliveira, O.E. Alacron, Mullite Formation in Al2O3/SiO2/SiC Composites for Processing Porous Radiant Burners, MRS Online Proceedings Library (2012) describes a method of synthesis of a composite comprising mullite, in which starting materials were Al₂O₃, SiO₂ and SiC powders in various proportions. Suspensions were prepared by ball milling the starting materials with the addition of bentonite (thickener) and carboxymethylcellulose (dispersant), with the mass ratio of water to solids of 80:20. The obtained sponges were dried for 24 hours and then heated to 850°C at the rate of 1°C/min to remove polyurethane. Samples were sintered at temperatures up to 1600°C in a furnace to obtain a final ceramic structure. The obtained composites comprised 26 to 82% by mass of the mullite phase.

In addition, the scientific publication by M.F. Zawrah, M.H. Aly, In situ formation of Al2O3-SiC-mullite from Al-matrix composites, Ceramic International (2006) describes a method of synthesis of composites based on Al₂O₃-SiC-mullite. Materials were designed and obtained *in situ* from different proportions of mixtures of alumina, silicon carbide and aluminium alloy (Al₉₃Fe₃Ti₂Cr₂). After the thermal treatment of initial mixtures, the composites in which the phases of Al₂O₃ (corundum), SiC and mullite predominate, were obtained. The phase composition of the obtained composites depended on the initial composition of the mixtures, the oxidation state of Al alloy, the oxidation state of SiC and the reaction between the initial materials. In composites having a lower content of mullite, additional silicate phases appeared, i.e. aluminosilicate phase (Al₂Si₄O₁₀) and/or cristobalite. It was found that the presence of these silicate phases, which are low-melting phases, increases apparent density, which leads to a decrease in porosity. The use of different sintering temperatures led to obtaining different compressive strengths. For example, during sintering at 1450°C, compressive strength between 200 and 280 MPa was obtained (depending on the initial composition), and at 1650°C, compressive strength from 600 to 680 MPa was obtained. Apparent porosity was in the range of 2 to 24 % by mass, with the lowest values of this parameter obtained for materials sintered at 1650°C.

In turn, the publication by X. Xu, Y. Zhang, J. Wu, C. Hu, C. Lu, D. Wang, In situ synthesis of SiC-bonded cordierite-mullite ceramics for solar thermal energy storage, Ceramic International (2016) presents a description of a one-step synthesis and testing of the properties of cordierite-mullite ceramic composites. The sintering of the composites was carried out by the *in situ* reaction bonding technique using different carbon sources (graphite, phenolic resin) and silicon sources (Si, SiO₂) for the synthesis of SiC. The composite consisted of cordierite and mullite in the mass ratio of 80:20. The obtained composites were characterized by high thermal conductivity, porosity in the range of 5 to 10% by mass and mechanical strength dependent on the amount of SiC in the composite.

The publication by S. Ding, S. Zhu, Y.P. Zeng, D. Jiang, Fabrication of mullite-bonded porous silicon carbide ceramics by in situ reaction bonding, Journal of the European Ceramic Society (2007) describes the synthesis and properties of a mullite-bonded porous SiC composite, where the pore-former was graphite. The applied oxidizing atmosphere causes the surface of SiC particles to oxidize to SiO₂, and with increasing the temperature from 1400 to 1550°C, the amorphous quartz oxide converts into cristobalite and reacts with Al₂O₃ to form mullite (3Al₂O₃ 2SiO₂). The SiC particles are bonded by mullite and SiO₂. Changes in the amount of graphite in a starting material, the forming pressure and the maximum sintering temperature affect the final properties of the obtained composites, mainly mechanical flexural strength.

The publication by Z. Li, Z. Chang, X. Liu, W. Zhao, X. Zhang, S. Xiao, Y. Tian, A. Li, G. Han, J. Li, J. Zhang, A novel sintering additive system for porous mullite-bonded SiC ceramics: High mechanical performance with controllable pore structure, Ceramic International (2022) describes a method of producing a SiC-mullite composite, which enables porous SiC ceramics to be sintered at a lower temperature of 1400-1600°C in the air, which significantly reduces production costs. An aluminum source is introduced to react with the oxidation-derived SiO₂ on the surface of SiC particles to form a mullite phase, which bonds the SiC particles together. The publication in question confirmed the absence of a cristobalite phase for samples sintered even at 1550°C in the air. The bonding phase present in the composite was mullite. The obtained composites were characterized by flexural strength of up to 113.0 MPa, which was achieved at the apparent porosity of 40.3 vol%, even higher than when sintered using the SPS technique (103 MPa, 35.7 vol%).

In turn, the publication by S. Akpinar, I.M. Kusoglu, O. Ertugrul, K. Onel, Silicon carbide particle reinforced mullite composite foams, Ceramic International (2012) describes composite materials having a "sponge" structure reinforced with silicon carbide particles. These composites were produced by the polymer replica method using alumina and kaolin forming *in situ* mullite matrix. From 0 to 20 wt.% of silicon carbide (SiC) particles were added to an aqueous ceramic suspension. The strength of the sintered composites was found to depend greatly on the phase composition, apparent density of the structure and the amount of SiC addition.

As can be seen from the state of the art presented above, methods of *in situ* production of composites comprising mullite and other components (e.g. SiC and SiO₂) differ, but the most important thing is both the selection of raw materials and their preparation before sintering.

### Summary of the Invention

### Technical problem

Despite the fact that ceramic composites comprising mullite in combination with other components are known in the art, there is still a need in the field for new composites that, thanks to their appropriate composition, will be characterized by an excellent combination of mechanical, thermal and electrical properties, including high strength and low density. Such composites will be able to serve as substrates enabling heat storage in next-generation solar energy conversion systems.

In connection with the above, the problem to be solved was to provide a ceramic composite with the above-mentioned properties and a method for its production.

### Solution to the problem

The problem presented above is solved by the solutions presented in the attached patent claims. It was unexpectedly found that the ceramic composite obtained by the method according to the invention is characterized by the desired properties, i.e. high strength and low density.

The subject matter of the invention is a ceramic composite comprising mullite, Si₃N₄, SiC and SiO₂.

Preferably, the ceramic composite has the following phase composition: 30 to 66% by mass of mullite, 10 to 22% by mass of Si₃N₄, 10 to 28% by mass of SiC and 10 to 20% by mass of SiO₂, in each case based on the total mass of the composite.

The subject matter of the invention is also a method for producing a ceramic composite comprising mullite, Si₃N₄, SiC and SiO₂, wherein said method comprises the following steps:
a) dispersing at least one clayey raw material to obtain at least one dispersed clayey raw material,
b) drying and sintering the at least one dispersed clayey raw material at a temperature in the range of 900 to 1300°C to obtain a sinter,
c) cooling the sinter to obtain a cooled sinter,
d) grinding the cooled sinter to obtain a ground sinter,
e) homogenizing the ground sinter with a reagent serving as a carbon source to obtain a mixture,
f) roasting the obtained mixture in a nitrogen atmosphere at a temperature in the range of 850 to 1000°C to obtain a roasted product,
g) pressing the roasted product to obtain a pressed product, and
h) sintering the pressed product in a nitrogen atmosphere at a temperature in the range of 1100 to 1800°C to obtain the ceramic composite comprising mullite, Si₃N₄, SiC and SiO₂.

Preferably, the method according to the invention further comprises, after step g), the step of additional pressing the pressed product in an isostatic press at a pressure of at least 100 MPa.

Preferably, in the method according to the invention, a clayey raw material containing at least one clay mineral selected from the group comprising kaolinite, nacrite, dickite, halloysite, montmorillonite, beidellite, saponite, illite, smectite, chlorite and muscovite is used as the clayey raw material.

More preferably, a raw material selected from the group consisting of kaolin, clay, bentonite and mixtures thereof is used as the clayey raw material.

Preferably, the dispersing in step a) is carried out to a grain size of not more than 0.75 mm, as determined by a sieve method, more preferably by preparing an aqueous suspension.

Preferably, in step b), the time of holding the at least one dispersed clayey raw material at a temperature in the range of 900 to 1300°C is from 10 to 60 minutes.

Preferably, the cooling in step c) is carried out at a rate of at least 0.5°C/min to a temperature below 100°C.

Preferably, the grinding in step d) is carried out by wet or dry grinding to a grain size of not more than 0.75 mm, as determined by a sieve method.

Preferably, carbon black, resin, graphite or carbon derivatives in the form of production waste, and more preferably, a resin from the group of phenyl-formaldehyde resins, is used as the reagent serving as a carbon source.

Preferably, the reagent serving as a carbon source is added in such an amount that the mass ratio of this reagent to a clayey raw material is in the range of 1:2 to 1:10.

Preferably, the time of holding the mixture obtained in step e) at a temperature in the range of 850 to 1000°C in step f) is from 1 minute to 4 hours.

Preferably, the time of holding the pressed product at a temperature in the range of 1100 to 1800°C in step h) is from 1 minute to 4 hours.

Preferably, the pressing in step g) is carried out at a pressure of at least 10 MPa.

Preferably, the ceramic composite comprising 30 to 66 % by mass of mullite, 10 to 22 % by mass of Si₃N₄, 10 to 28 % by mass of SiC and 10 to 20 % by mass of SiO₂, in each case based on the total mass of the composite, is obtained.

### Advantageous effects of the Invention

The use of nitrogen as a protective gas during the heat treatment of clayey raw materials allows silicon nitride to be obtained as a result of the reaction of active silicon with nitrogen. Silicon nitride has the best combination of mechanical, thermal and electrical properties among all ceramic materials. It is characterized by high strength, and high hardness and is exceptionally resistant to thermal shock and impact. It also serves as a ceramic insulating material.

In connection with the above, a new ceramic composite comprising SiC (silicon carbide), mullite, Si₃N₄ (silicon nitride) and SiO₂ (quartz) was obtained using the method according to the invention. The composite according to the invention is characterized by very good homogeneity of the distribution of component phases in the microstructure and high thermal shock resistance. An increase in the strength of the obtained composites is significantly influenced by the obtained phase composition of the composite, i.e. high content of the silicon carbide phase and the presence of silicon nitride. Another advantage of the obtained composite is its low density. The above-mentioned properties make it possible to use the composite according to the invention in applications where high load capacity, thermal stability and wear resistance are required.

### Brief description of the drawings

- Fig. 1: Diffraction pattern of the phase composition of the composite obtained in Example 1.
- Fig. 2: Image of the microstructure of the surface of the composite obtained in Example 1 at 600x magnification obtained using a scanning microscope.
- Fig. 3: Image of the microstructure of the fracture of the composite obtained in Example 1 at 2000x magnification obtained using a scanning microscope.

### Description of the implementation of the Invention

According to the invention, the starting material for obtaining the composites according to the invention is a clayey raw material. Preferably, a clayey raw material containing at least one clay mineral selected from the group comprising kaolinite, nacrite, dickite, halloysite, montmorillonite, beidellite, saponite, illite, smectite, chlorite and muscovite is used. According to the invention, it is most preferred to use a clayey raw material selected from the group consisting of kaolin, clay and bentonite. One clayey raw material or a mixture of clayey raw materials in an appropriate ratio may be used and therefore throughout the description and claims the term "clayey raw material" includes one clayey raw material and two or more clayey raw materials used in a mixture.

Preferably, the clayey raw material used in the method according to the invention contains variable amounts of kaolinite (22 to 90% by mass, more preferably 40 to 90% by mass), illite (0 to 36% by mass, more preferably 0 to 26% by mass), quartz (0 to 36% by mass, more preferably 0 to 26% by mass) and muscovite (0 to 44% by mass, more preferably 8 to 25% by mass). All the percentages given above are based on the total mass of the raw material.

In the first step (step a)) of the method according to the invention, a clayey raw material is dispersed. Dispersing can be carried out by any means known in the art, preferably by using a stirrer. Preferably, the dispersing is carried out by preparing an aqueous suspension of the clayey raw material. After dispersing, the clayey raw material is sieved through a sieve with a mesh size of preferably not more than 0.75 mm to obtain a dispersed raw material having a grain size of not more than 0.75 mm.

The dispersed clayey raw material is subjected to drying and sintering (step b) to obtain a sinter. The drying and sintering are carried out in a furnace at a temperature in the range of 900 to 1300°C. The time of holding the raw material at the selected sintering temperature is preferably in the range of 10 to 60 minutes.

In the next step (step c)), the obtained sinter is subjected to cooling, preferably to a temperature below 100°C. The cooling can be carried out by any method known in the art, and preferably, the cooling is carried out in a furnace. Furthermore, it is preferred that the cooling is carried out at a rate of at least 0.5°C/min, with the maximum cooling rate being 30°C/min.

A cooled sinter is then subjected to grinding (step d), preferably to a grain size of not more than 0.75 mm. The grinding can be carried out by wet grinding with the addition of a solvent or by dry grinding without the addition of a solvent. During the wet grinding, water or another solvent, for example, 2-propanol and/or ethanol, is introduced into a system. An appropriate grain size is obtained by sieving a ground sinter through a sieve with a mesh size of not more than 0.75 mm.

The ground sinter is subjected to homogenization with a reagent serving as a carbon source (step e). The carbon source is preferably carbon black, resins, graphite and other carbon derivatives in the form of production waste. Resins from the group of phenyl-formaldehyde resins are preferably used. The homogenization can be carried out in any known homogenization device, preferably in a mixer. In accordance with the invention, the reagent serving as a carbon source is added in an amount such that the mass ratio of the reagent to a clayey raw material is in the range of 1:2 to 1:10, preferably from 1:4 to 1:8. The specific amount of the reagent added can be selected by a person skilled in the art based on the desired properties of a final product (e.g. composition, physical properties, etc.).

A homogenized mixture is subjected to roasting (step f) in a reducing atmosphere. The reducing atmosphere is oxygen-free conditions obtained by using an inert gas such as nitrogen. The roasting is carried out at a temperature in the range of 850 to 1000°C. The time of holding the homogenized mixture at this temperature is preferably from 1 minute to 4 hours.

A roasted product is pressed (step g) at a pressure of preferably at least 10 MPa. The maximum pressure may be 70 MPa. As a result of pressing, a pressed pellet is obtained.

In a preferred embodiment, the pressing step may be followed by a step of additional pressing in an isostatic press at a pressure of at least 100 MPa, wherein the maximum pressure may be 300 MPa.

A pressed and optionally additionally pressed product is subjected to sintering (step h) in a nitrogen atmosphere at a temperature in the range of 1100 to 1800°C. As a result of the sintering, a final ceramic composite comprising mullite, Si₃N₄, SiC and SiO₂ is obtained. Preferably, heating is carried out at a rate of at least 0.5°C/min. The time of holding a sample at the above-given sintering temperature is preferably from 1 minute to 4 hours.

During a thermal treatment comprising step b), step f) and step h), clay minerals undergo thermal conversions, such as dehydroxylation, formation of metakaolinite, conversion of metakaolinite into silicoaluminate spinel, formation of active quartz and formation of mullite I (lamellar type), which is accompanied by the formation of additional active silicon oxide. As a result of a high-temperature reaction between the active silicon oxide and an active carbon supplied to a system, silicon carbide (SiC) is formed. The use of nitrogen as protective gases during the thermal treatment makes it possible to obtain an additional component of a composite, namely silicon nitride (Si₃N₄). Thus, the method according to the invention makes it possible to obtain a composite comprising mullite (formed as a result of the thermal conversions of clay minerals), silicon carbide (SiC), quartz (SiO₂) and silicon nitride (Si₃N₄).

The composite according to the invention preferably has the following phase composition: 30 to 66 % by mass of mullite, 10 to 22 % by mass of Si₃N₄ (silicon nitride), 10 to 28 % by mass of SiC (silicon carbide) and 10 to 20 % by mass of SiO₂ (quartz), in each case based on the total mass of the composite.

### Examples

The invention is described in detail in the following embodiments and the results of tests are shown in the following attached figures.

### Example 1

A kaolin powder of the following composition: kaolinite (64.7% by mass), quartz (10.9% by mass) and muscovite (24.4% by mass) was dispersed and sieved to obtain a powder having a grain size of not more than 0.075 mm. This powder was dried and sintered at 950°C, with the holding time at this temperature of 60 minutes, to obtain a sinter. The obtained sinter was then cooled at the rate of 0.5°C/min to 100°C. A cooled sinter was wet-grinded to a residue on a sieve with the mesh diameter of 0.100 mm and then homogenized with a phenyl-formaldehyde resin. The resin was added in the amount of 15 g per 116.5 g of the kaolin powder. The mixture obtained in this way was roasted in a reducing atmosphere (in a nitrogen shield) at 850°C to remove an excess of carbon. The holding time at 850°C was 4 hours. The powder prepared in this way was pressed into a pellet form at the pressure of 10 MPa. Then, a pressed powder was sintered in a reducing atmosphere (in a nitrogen shield) at 1350°C, with the powder being held at this temperature for 4 hours.

The obtained composite was characterized by the following phase composition: 60% by mass of mullite, 15% by mass of SiC, 14.7% by mass of Si₃N₄ and 10.3% by mass of SiO₂, in each case based on the total mass of the composite.

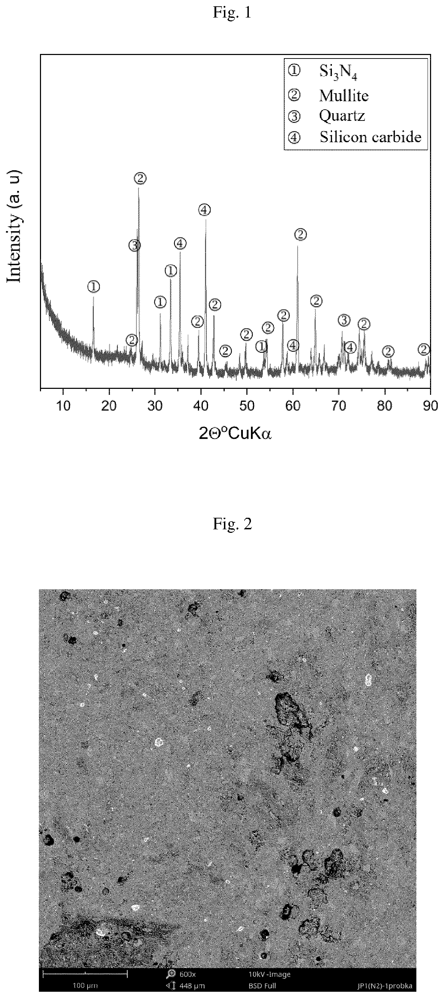

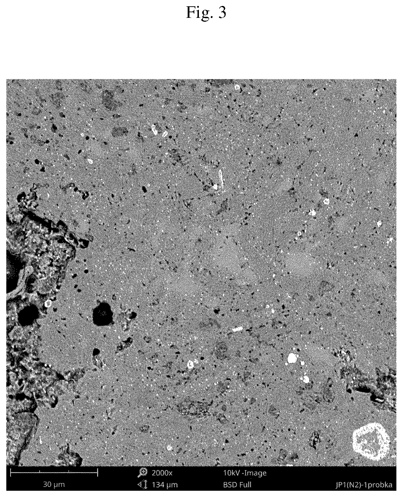

A diffraction pattern was recorded for the obtained composite (Fig. 1), which confirms its composition presented above. In addition, images were taken using a scanning microscope (Fig. 2 and 3), which clearly shows the lack of pores, which indicates increased densification of the composite.

### Example 2

Kaolin and clay powders of the following composition: kaolinite (45 % by mass), illite (26 % by mass), quartz (10,6 % by mass) and muscovite (18,4 % by mass) were dispersed and sieved to obtain powders having a grain size of not more than 0.7 mm. These powders were dried and sintered at 1200°C, with the holding time at this temperature of 10 minutes, to obtain a sinter. The obtained sinter was then cooled at the rate of 4°C/min to 100°C. A cooled sinter was dry-grinded to a residue on a sieve with the mesh diameter of 0.10 mm and then homogenized with a phenyl-formaldehyde resin. The resin was added in the amount of 15 g per 116.5 g of the kaolin and clay powders. The mixture obtained in this way was roasted in a reducing atmosphere (in a nitrogen shield) at 850°C to remove an excess of carbon. The holding time at 850°C was 2 hours. The powder prepared in this way was pressed into a pellet form at the pressure of 40 MPa. Then, a pressed powder was sintered in a reducing atmosphere (in a nitrogen shield) at 1450°C, with the powder being held at this temperature for 2 hours.

The obtained composite was characterized by the following phase composition: 50 % by mass of mullite, 25 % by mass of SiC, 10,7 % by mass of Si₃N₄ and 14,3 % by mass of SiO₂, in each case based on the total mass of the composite.

### Example 3

Kaolin and clay powders of the following composition: kaolinite (45 % by mass), illite (26 % by mass), quartz (10,6 % by mass) and muscovite (18,4 % by mass) were dispersed and sieved to obtain powders having a grain size of not more than 0.063 mm. These powders were dried and sintered at 1000°C, with the holding time at this temperature of 10 minutes, to obtain a sinter. The obtained sinter was then cooled at the rate of 1°C/min to 100°C. A cooled sinter was wet-grinded to a residue on a sieve with the mesh diameter of 0.75 mm and then homogenized with a phenyl-formaldehyde resin. The resin was added in the amount of 15 g per 116.5 g of the kaolin and clay powders. The mixture obtained in this way was roasted in a reducing atmosphere (in a nitrogen shield) at 850°C to remove an excess of carbon. The holding time at 850°C was 1 hour. The powder prepared in this way was pressed into a pellet form at the pressure of 20 MPa. Then, a pressed powder was sintered in a reducing atmosphere (in a nitrogen shield) at 1450°C, with the powder being held at this temperature for 1 hour.

The obtained composite was characterized by the following phase composition: 40 % by mass mullite, 25 % by mass SiC, 20 % by mass Si₃N₄ and 15 % by mass SiO₂, in each case based on the total mass of the composite.

### Example 4

A kaolin powder of the following composition: kaolinite (55,3 % by mass), quartz (25,3 % by mass) and muscovite (19,4 % by mass) was dispersed and sieved to obtain a powder having a grain size of not more than 0.075 mm. This powder was dried and sintered at 1000°C, with the holding time at this temperature of 10 minutes, to obtain a sinter. The obtained sinter was then cooled at the rate of 4°C/min to 100°C. A cooled sinter was dry-grinded to a residue on a sieve with the mesh diameter of 0.10 mm and then homogenized with carbon black. The carbon black was added in the amount of 15 g per 116.5 g of the kaolin powder. The mixture obtained in this way was roasted in a reducing atmosphere (in a nitrogen shield) at 950°C to remove an excess of carbon. The holding time at 950°C was 3 hours. The powder prepared in this way was pressed into a pellet form at the pressure of 30 MPa. Then, a pressed powder was sintered in a reducing atmosphere (in a nitrogen shield) at 1450°C, with the powder being held at this temperature for 3 hours.

The obtained composite was characterized by the following phase composition: 50 % by mass mullite, 15 % by mass SiC, 20 % by mass Si₃N₄ and 15 % by mass SiO₂, in each case based on the total mass of the composite.

### Example 5

A kaolin powder of the following composition: kaolinite (89,1 % by mass) and muscovite (10,9 % by mass) was dispersed and sieved to obtain a powder having a grain size of not more than 0.063 mm. This powder was dried and sintered at 1000°C, with the holding time at this temperature of 10 minutes, to obtain a sinter. The obtained sinter was then cooled at the rate of 4°C/min to 100°C. A cooled sinter was wet-grinded to a residue on a sieve with the mesh diameter of 0.10 mm and then homogenized with a phenyl-formaldehyde resin. The resin was added in the amount of 15 g per 116.5 g of the kaolin powder. The mixture obtained in this way was roasted in a reducing atmosphere (in a nitrogen shield) at 950°C to remove an excess of carbon. The holding time at 950°C was 1 hour. The powder prepared in this way was pressed into a pellet form at the pressure of 30 MPa. Then, a pressed powder was sintered in a reducing atmosphere (in a nitrogen shield) at 1800°C, with the powder being held at this temperature for 1 hour.

The obtained composite was characterized by the following phase composition: 40 % by mass mullite, 25 % by mass SiC, 20 % by mass Si₃N₄ and 15 % by mass SiO₂, in each case based on the total mass of the composite.

### Example 6

A clay powder of the following composition: kaolinite (55 % by mass), illite (26 % by mass), quartz (10,6 % by mass) and muscovite (8,4 % by mass) was dispersed and sieved to obtain a powder having a grain size of not more than 0.063 mm. This powder was dried and sintered at 1000°C, with the holding time at this temperature of 10 minutes, to obtain a sinter. The obtained sinter was then cooled at the rate of 4°C/min to 100°C. A cooled sinter was wet-grinded to a residue on a sieve with the mesh diameter of 0.75 mm and then homogenized with a phenyl-formaldehyde resin. The resin was added in the amount of 15 g per 116.5 g of the clay powder. The mixture obtained in this way was roasted in a reducing atmosphere (in a nitrogen shield) at 950°C to remove an excess of carbon. The holding time at 950°C was 1 minute. The powder prepared in this way was pressed into a pellet form at the pressure of 10 MPa. Then, a pressed powder was sintered in a reducing atmosphere (in a nitrogen shield) at 1800°C, with the powder being held at this temperature for 1 minute.

The obtained composite was characterized by the following phase composition: 30 % by mass mullite, 28 % by mass SiC, 22 % by mass Si₃N₄ and 20 % by mass SiO₂, in each case based on the total mass of the composite.

### Example 7

A clay powder of the following composition: kaolinite (40 % by mass), illite (21 % by mass), quartz (20,6 % by mass) and muscovite (18,4 % by mass) was dispersed and sieved to obtain a powder having a grain size of not more than 0.063 mm. This powder was dried and sintered at 1000°C, with the holding time at this temperature of 10 minutes, to obtain a sinter. The obtained sinter was then cooled at the rate of 4°C/min to 100°C. A cooled sinter was wet-grinded to a residue on a sieve with the mesh diameter of 0.75 mm and then homogenized with a phenyl-formaldehyde resin. The resin was added in the amount of 15 g per 116.5 g of the clay powder. The mixture obtained in this way was roasted in a reducing atmosphere (in a nitrogen shield) at 1000°C to remove an excess of carbon. The holding time at 1000°C was 1 minute. The powder prepared in this way was pressed into a pellet form at the pressure of 10 MPa and additionally pressed in an isostatic press at the pressure of 100 MPa. Then, a pressed powder was sintered in a reducing atmosphere (in a nitrogen shield) at 1750°C, with the powder being held at this temperature for 1 minute.

The obtained composite was characterized by the following phase composition: 34 % by mass mullite, 26 % by mass SiC, 20 % by mass Si₃N₄ and 20 % by mass SiO₂, in each case based on the total mass of the composite.

### Example 8

A clay powder of the following composition: kaolinite (50 % by mass), illite (21 % by mass), quartz (20,6 % by mass) and muscovite (8,4 % by mass) was dispersed and sieved to obtain a powder having a grain size of not more than 0.063 mm. This powder was dried and sintered at 1300°C, with the holding time at this temperature of 10 minutes, to obtain a sinter. The obtained sinter was then cooled at the rate of 4°C/min to 100°C. A cooled sinter was wet-grinded to a residue on a sieve with the mesh diameter of 0.75 mm and then homogenized with a phenyl-formaldehyde resin. The resin was added in the amount of 15 g per 116.5 g of the clay powder. The mixture obtained in this way was roasted in a reducing atmosphere (in a nitrogen shield) at 900°C to remove an excess of carbon. The holding time at 900°C was 1 minute. The powder prepared in this way was pressed into a pellet form at the pressure of 25 MPa. Then, a pressed powder was sintered in a reducing atmosphere (in a nitrogen shield) at 1500°C, with the powder being held at this temperature for 1 minute.

The obtained composite was characterized by the following phase composition: 36 % by mass mullite, 26 % by mass SiC, 20 % by mass Si₃N₄ and 18 % by mass SiO₂, in each case based on the total mass of the composite.

### Example 9

A clay powder of the following composition: kaolinite (54,7 % by mass), quartz (10,9 % by mass), muscovite (24,4 % by mass) and illite (10 % by mass) was dispersed and sieved to obtain a powder having a grain size of not more than 0.05 mm. This powder was dried and sintered at 950°C, with the holding time at this temperature of 60 minutes, to obtain a sinter. The obtained sinter was then cooled at the rate of 0,5°C/min to 50°C. A cooled sinter was wet-grinded to a residue on a sieve with the mesh diameter of 0.75 mm and then homogenized with graphite. The graphite was added in the amount of 15 g per 116.5 g of the clay powder. The mixture obtained in this way was roasted in a reducing atmosphere (in a nitrogen shield) at 850°C to remove an excess of carbon. The holding time at 850°C was 1 hour. The powder prepared in this way was pressed into a pellet form at the pressure of 70 MPa. Then, a pressed powder was sintered in a reducing atmosphere (in a nitrogen shield) at 1200°C, with the powder being held at this temperature for 1 hour.

The obtained composite was characterized by the following phase composition: 66 % by mass mullite, 10 % by mass SiC, 12 % by mass Si₃N₄ and 12 % by mass SiO₂, in each case based on the total mass of the composite.

The obtained composites were analyzed according to the calculation tables in the PN-EN ISO 6507-4 standard and it was found that they have hardness values in the range of 15 to 19 GPa. On the other hand, typical values for ceramic composites are in the range of 10 to 12 GPa.

In addition, the composites obtained above were tested for their density. As a result of these tests, it was found that all composites were characterized by a density of about 3.15 ± 0.8 g/cm³.

## Claims

1. A ceramic composite, **characterized in that** said composite comprises mullite, Si₃N₄, SiC and SiO₂.

2. The ceramic composite according to claim 1, **characterized in that** said composite has the following phase composition: 30 to 66 % by mass of mullite, 10 to 22 % by mass of Si₃N₄, 10 to 28 % by mass of SiC and 10 to 20 % by mass of SiO₂, in each case based on the total mass of the composite.

3. A method for producing a ceramic composite comprising mullite, Si₃N₄, SiC and SiO₂, wherein said method comprises the following steps:
a) dispersing at least one clayey raw material to obtain at least one dispersed clayey raw material,
b) drying and sintering the at least one dispersed clayey raw material at a temperature in the range of 900 to 1300°C to obtain a sinter,
c) cooling the sinter to obtain a cooled sinter,
d) grinding the cooled sinter to obtain a ground sinter,
e) homogenizing the ground sinter with a reagent serving as a carbon source to obtain a mixture,
f) roasting the obtained mixture in a nitrogen atmosphere at a temperature in the range of 850 to 1000°C to obtain a roasted product,
g) pressing the roasted product to obtain a pressed product, and
h) sintering the pressed product in a nitrogen atmosphere at a temperature in the range of 1100 to 1800°C to obtain the ceramic composite comprising mullite, Si₃N₄, SiC and SiO₂.

4. The method according to claim 3, **characterized in that** the method further comprises, after step g), the step of additional pressing the pressed product in an isostatic press at a pressure of at least 100 MPa.

5. The method according to claim 3 or 4, **characterized in that** a clayey raw material containing at least one clay mineral selected from the group comprising kaolinite, nacrite, dickite, halloysite, montmorillonite, beidellite, saponite, illite, smectite, chlorite and muscovite is used as the clayey raw material.

6. The method according to claim 5, **characterized in that** a raw material selected from the group consisting of kaolin, clay, bentonite and mixtures thereof is used as the clayey raw material.

7. The method according to any one of claims 3 to 6, **characterized in that** the dispersing in step a) is carried out to a grain size of not more than 0.75 mm, as determined by a sieve method, preferably by preparing an aqueous suspension.

8. The method according to any one of claims 3 to 7, **characterized in that** in step b) the time of holding the at least one dispersed clayey raw material at a temperature in the range of 900 to 1300°C is from 10 to 60 minutes.

9. The method according to any one of claims 3 to 8, **characterized in that** the cooling in step c) is carried out at a rate of at least 0.5°C/min to a temperature below 100°C.

10. The method according to any one of claims 3 to 9, **characterized in that** the grinding in step d) is carried out by wet or dry grinding to a grain size of not more than 0.75 mm, as determined by a sieve method.

11. The method according to any one of claims 3 to 10, **characterized in that** carbon black, resin, graphite or carbon derivatives in the form of production waste, preferably a resin from the group of phenyl-formaldehyde resins, is used as the reagent serving as a carbon source.

12. The method according to any one of claims 3 to 11, **characterized in that** the reagent serving as a carbon source is added in such an amount that the mass ratio of this reagent to a clayey raw material is in the range of 1:2 to 1:10.

13. The method according to any one of claims 3 to 12, **characterized in that** in step f) the time of holding the mixture obtained in step e) at a temperature in the range of 850 to 1000°C is from 1 minute to 4 hours.

14. The method according to any one of claims 3 to 13, **characterized in that** in step h) the time of holding the pressed product at a temperature in the range of 1100 to 1800°C is from 1 minute to 4 hours.

15. The method according to any one of claims 3 to 14, **characterized in that** the pressing in step g) is carried out at a pressure of at least 10 MPa.
